# EUROPEAN PATENT APPLICATION

(11) **EP 4 074 647 A1**
(43) Date of publication of application: **19.10.2022**
(21) Application number: 21168693.6
(22) Date of filing: 15.04.2021
(51) Int. Cl.: B66C 23/42, B66C 23/00, B66C 23/62, B66C 23/90, B60P 1/54

(54) **A METHOD AND SYSTEM FOR PREVENTING OVERTURNING OF A ROLLER CRANE**

(71) Applicant: Hyva Holding BV, 2408 AK Alphen aan den Rijn (NL)
(72) Inventor: KENNIS, Andrew, 6028RL Gastel (NL)
(74) Representative: Haseltine Lake Kempner LLP

(57) **Abstract**

There is disclosed a method of preventing overturning of a roller crane (10, 100), the roller crane comprising a truck (12), a trailer (14) extending from the truck along a longitudinal axis and seated on at least two wheel-axles (18) with wheels (40), and a crane (20) mounted to the trailer to move along the longitudinal axis of the trailer. The method comprises monitoring a stability parameter with at least one stability sensor (30), the stability parameter relating to tilting of at least one of the wheel-axles or a load distribution on the wheels of at least one wheel-axle, and identifying whether the roller crane is at risk of overturning based on the stability parameter. It further comprises generating an output if it is determined that the roller crane is at risk of overturning. There is also disclosed a system for preventing overturning of a roller crane comprising a stability module (34).

## Description

The present invention relates to a method for preventing overturning of a roller crane, and a system for the same.

Roller cranes including any crane which can travel up and down a trailer whilst lifting a load are susceptible to overturning when the load being lifted is too high, or too far from the trailer. Previously considered methods for preventing, or reducing the risk of, overturning of roller cranes measure the tilt of the crane relative to the ground during use and tend to be over conservative, and prevent lifting of load in situations in which it would be safe to do so. References to preventing overturning of roller cranes herein are intended to refer to reducing the risk of overturning.

According to a first aspect, there is provided a method of preventing overturning of a roller crane, the roller crane comprising a truck, a trailer extending from the truck along a longitudinal axis and seated on at least two wheel-axles with wheels, and a crane mounted to the trailer to move along the longitudinal axis of the trailer, the method comprising: monitoring a stability parameter with at least one stability sensor, the stability parameter relating to tilting of at least one of the wheel-axles or a load distribution on the wheels of at least one wheel-axle; and identifying whether the roller crane is at risk of overturning based on the stability parameter; and generating an output if it is determined that the roller crane is at risk of overturning.

The at least one stability sensor may be configured to output a first stability parameter and a second stability parameter relating to tilting of at least two wheel-axles, or relating to the load distribution on the wheels connected to each of the at least two wheel-axles.

The stability parameter may be generated by an inclination sensor mounted to a wheel-axle or may be generated by a distance sensor arranged to measure the distance between the respective wheel-axle and the trailer.

The stability parameter may be related to a change in tilting of at least one wheel-axle and the stability parameter may be generated by an inertial sensor mounted to a wheel-axle.

The stability parameter may be generated by a load cell on the respective wheel-axle or the respective wheels or may be generated by a pressure sensor on the respective wheels to determine tyre pressure or a suspension pressure in a suspension unit.

The method may include identifying that the roller crane is at risk of overturning if the stability parameter exceeds a threshold. The method may include identifying that the roller crane is at risk of overturning if the first stability parameter exceeds a first threshold and/or if the second stability parameter exceeds a second threshold.

The stability parameter may relate to grounding of at least one of the wheels, based on the load distribution. The method may include identifying that the roller crane is at risk of overturning if the stability parameter indicates that a wheel is not grounded.

Generating the output may comprise reducing a slewing angle of the crane and/or reducing an extension of the crane.

The method may comprise monitoring a location parameter with at least one location sensor, the location parameter relating to the location of the crane on the trailer along the longitudinal axis. Identifying whether the roller crane is at risk of overturning may further be based on the location parameter.

According to a second aspect, there is provided a system for preventing overturning of a roller crane, the roller crane comprising a truck, a trailer extending from the truck along a longitudinal axis and seated on at least two wheel-axles with wheels, and a crane mounted to the trailer to move along the longitudinal axis of the trailer, the system comprising: at least one stability sensor configured to be mounted to the roller crane to generate a stability parameter relating to tilting of at least one of the wheel-axles or a load distribution on the wheels of at least one wheel axle; a stability module configured to: monitor the stability parameter and identify whether the roller crane is at risk of overturning based on the stability parameter; and generate an output if it is determined that the roller crane is at risk of overturning.

The at least one stability sensor may be configured to generate a first stability parameter and a second stability parameter relating to tilting of at least two wheel-axles, or relating to the load distribution on the wheels connected to each of the at least two wheel-axles.

The at least one stability sensor may comprise an inclination sensor configured to be mounted to a wheel-axle or may comprise a distance sensor configured to measure the distance between the respective wheel-axle and the trailer.

The at least one stability sensor may comprise an inertial sensor mounted to a wheel-axle and may be configured to generate the stability parameter relating to a change in tilting of the respective wheel-axle.

The at least one stability sensor may comprise a load cell configured to be mounted on the respective wheel-axle or the respective wheels, or may comprise a pressure sensor configure to be mounted on the respective wheels to determine tyre pressure or a suspension pressure in a suspension unit.

The stability module may be configured to identify that the roller crane is at risk of overturning when the stability parameter exceeds a threshold.

The stability module may be configured to identify that the roller crane is at risk of overturning when the first stability parameter exceeds a first threshold and/or when the second stability parameter exceeds a second threshold.

The stability parameter may relate to grounding of at least one of the wheels, based on the load distribution.

The stability module may be configured to identify that the roller crane is at risk of overturning when the stability parameter indicates that a wheel is not grounded.

The system may comprise at least one location sensor configured to generate a location parameter relating to the location of the crane on the trailer along the longitudinal axis. The stability module may be configured to monitor the location parameter and identify whether the roller crane is at risk of overturning based further on the location parameter.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described, by way of example only, with reference to the accompanying Figures, in which:
**Figure 1** schematically shows a side view of a first example roller crane;
**Figure 2** schematically shows a rear view of the first example roller crane;
**Figure 3** schematically shows a rear view of a second example roller crane;
**Figure 4** is a flow chart showing general steps of a method for preventing overturning of a roller crane; and
**Figure 5** is a flow chart showing steps of the method in more detail.

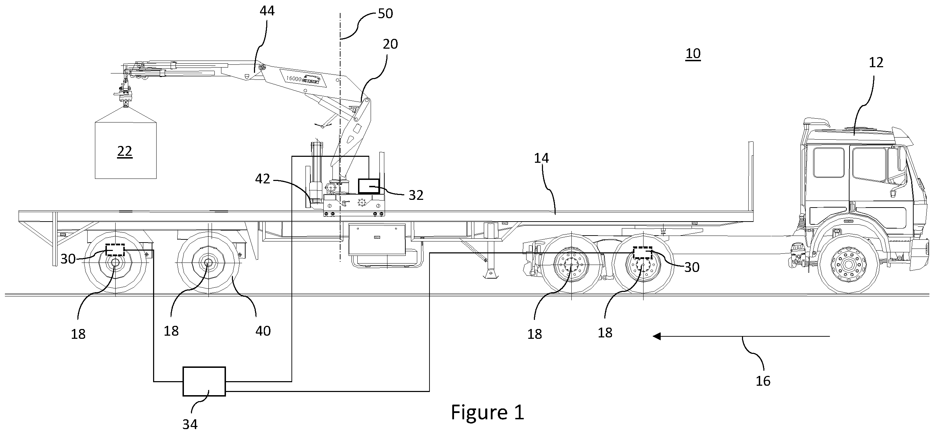

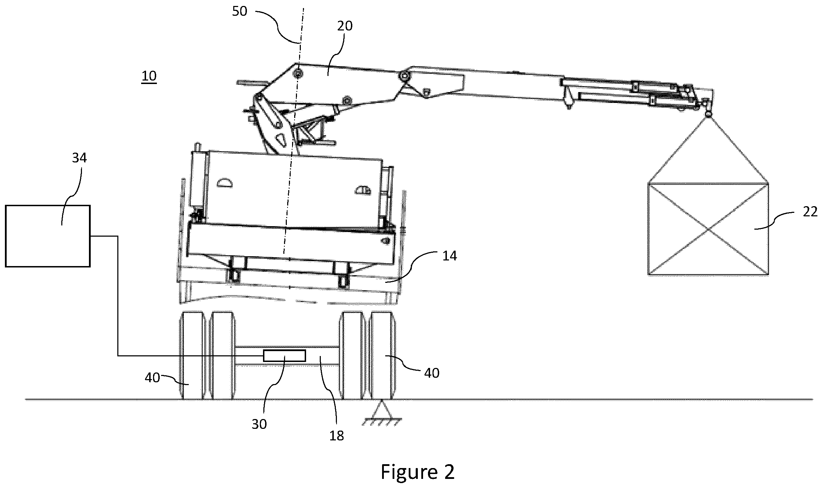

**Figures 1** **and** **2** show a side view and a rear view respectively of a first example roller crane 10 comprising a truck 12 and a trailer 14 extending from the truck 12 along a longitudinal axis 16. The trailer 14 is seated on four wheel-axles 18, each comprising wheels 40 resting on the ground. In other examples, the trailer may be seated on any suitable number of wheel-axles, such as at least two wheel-axles. A crane 20, which is configured to pick up and carry a load 22, is mounted on the trailer 14 and is moveable on the trailer along the longitudinal axis 16.

The crane 20 comprises a platform 42 on which an articulated crane arm 44 is mounted. The platform 42 rests on the trailer 14 on rollers such that it can be moved on the trailer 14 along the longitudinal axis 16 by rolling. The platform 42 can be locked in position on the trailer 14 when the crane 20 is to be used to lift the load 22.

The crane arm 44 is configured to rotate (slew) about a rotation axis 50 on the platform 42 and is configured to extend and retract such that an end of the crane arm 44, from which a load may be suspended, can reach a load 22 anywhere within a torus around the rotation axis 50, provided that the crane arm 44 does not collide with the truck 12 or trailer 14.

The roller crane 10 comprises a system to prevent overturning of the roller crane 10. The system comprises a pair of stability sensors 30, a location sensor 32, and a stability module 34.

A first stability sensor 30 in this example is disposed on the rearmost wheel-axle 18 of the trailer 14 (i.e. the wheel-axle 18 furthest from the truck 12) and a second stability sensor 30 is disposed on the frontmost wheel-axle 18 of the trailer 14 (i.e. the wheel-axle 18 closest to the truck 12). The first stability sensor 30 is configured to generate a first stability parameter relating to the tilting of the rearmost wheel-axle 18 and the second stability sensor 30 is configured to generate a second stability parameter relating to the tilting of the frontmost wheel-axle 18. In this example, the stability sensors 30 are inclination sensors which measures the inclination of the respective wheel-axles 18 on which they are disposed. In some examples, the stability sensors may be inertial sensors configured to generate a stability parameter which relates to the change in tilting of the wheel-axle to which it is mounted.

It will be appreciated that any suitable type of sensor may be used to generate a stability parameter relating to the tilting of a wheel-axle.

The location sensor 32 is disposed on the crane 20 and is configured to generate a location parameter relating to the location of the crane 20 on the trailer 14 along the longitudinal axis 16.

The stability module 34 is configured to monitor the first stability parameter, the second stability parameter and the location parameter, and to identify whether the roller crane 10 is at risk of overturning based on the first stability parameter, the second stability parameter and the location parameter. References herein to the roller crane being at risk of overturning are intended to refer to a significant risk of overturning that requires immediate mitigation.

For example, if the first stability parameter indicates that the rearmost wheel axle 18 (on which it is disposed) is tilting with respect to the ground, this may indicate that the trailer 14 is no longer stable, and therefore that there is a risk of overturning. Similar logic can be applied to the second stability parameter.

Further, the stability of the trailer 14 may be dependent on the location of the crane 20 along the longitudinal extent of the trailer 14. For example, if the crane 20 is located at a front end of the trailer 14, near to the truck 12, and the first stability parameter indicates that the rearmost wheel-axle 18 is tilting, this may not be sufficient to indicate that the trailer 14 is at risk of overturning, but the second stability parameter indicating that the frontmost wheel-axle 18 is tilting may be sufficient to indicate that the trailer 14 is at risk of overturning. In contrast, if the crane 20 is located at or towards a rear end of the trailer 14, furthest away from the truck 12, the first stability parameter indicating that the rearmost wheel-axle 18 is tilting may be sufficient to identify a risk of overturning of the roller crane 10.

In this example, the stability module 34 is configured to identify that the roller crane 10 is at risk of overturning when either one or both of the first stability parameter or the second stability parameter exceeds a respective first and second threshold. In this example, the first threshold and the second threshold are dynamically adjusted based on the location parameter. It will be appreciated that in other examples, the threshold may be fixed. In other examples, the stability module may be configured to identify that the roller crane is at risk of overturning when the rate of change of the first stability parameter or second stability parameter exceeds a threshold.

The stability module 34 is configured to generate an output if it is determined that the roller crane 10 is at risk of overturning. In this example, the output comprises automatically reduce a slewing angle of the crane 20, in other words, to rotate the crane arm 44 about the rotation axis 50 so that an end of the crane 20 from which the load is suspended is moved closer to the trailer 14 to reduce a moment arm of the load 22 from the trailer 14. In this example, the output also comprises automatically reducing an extension of the crane 20 (i.e. by retracting the crane arm 44). This further reduces the moment arm of the crane 20 to reduce the risk of overturning.

It will be appreciated that the output of the stability module may be only reducing the slewing angle or only reducing the extension of the crane automatically. In other examples, the output may merely comprise generating a visual or audible output to an operator to alert them to the risk of overturning or generating instructions or a signal to perform any action which mitigates or reduces the risk of overturning. In further examples, the output may be any combination of reducing the slewing angle, reducing the extension of the crane, and generating a visual or audible alert, or any other suitable output which alerts an operator or automatically reduces the risk of overturning.

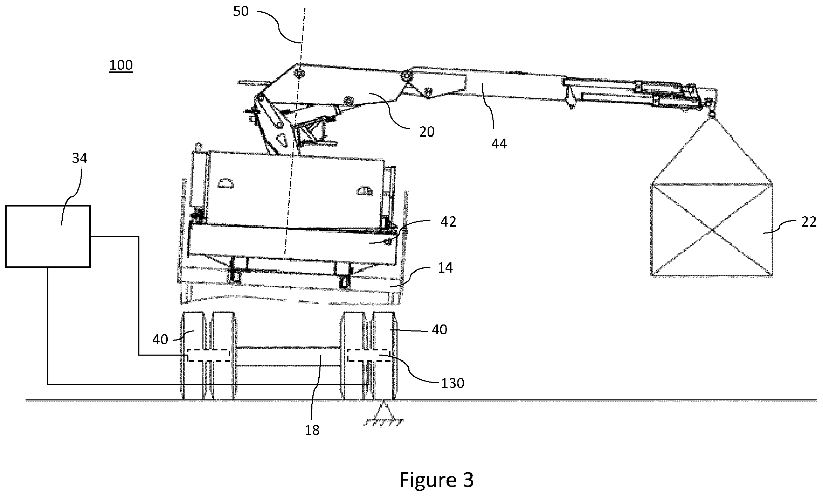

**Figure 3** shows a rear view of a second example roller crane 100. It comprises similar features to the first example roller crane 10, including the truck (not shown), the trailer 14 seated on at least two wheel-axles 18 (only one wheel-axle 18 is shown) having wheels 40. It also comprises the crane 20 having a crane platform 42 which is mounted on and moveable along the trailer 14, and an articulated crane arm 44 which is configured to slew about a rotation axis 50 on the platform 42 and extend and retract to enable it to pick up and carry a load 22 from an end of the crane arm 44.

The second example roller crane 100 also comprises a system for preventing overturning of a roller crane 100. The system in this example is similar to the system in the first example roller crane 10 in that it comprises a stability module 34 and a location sensor (not shown) disposed on the crane 20 and configured to generate a location parameter relating to the location of the crane 20 on the trailer 14 along the longitudinal direction of the trailer 14.

The system of the second example roller crane 100 differs from the first example roller crane 10 in that it comprises two stability sensors 130 on a single wheel-axle 18. The stability sensors 130 in this example are disposed by the wheels 40 on the rearmost wheel-axle 18, on either side of the wheel-axle 18, and are configured to generate a stability parameter relating to the load distribution on the wheels 40 of the rearmost wheel-axle 18. The output of the stability sensors 130 may require computation to generate the stability parameter and this computation may be performed in a processor such as the stability module or by the sensors themselves.

In this example, the stability sensors 130 are load cells on the wheels 40 to determine the force going through each wheel 40. The stability module is configured to convert the outputs of the stability sensors 130 to generate the stability parameter relating to the load distribution on the wheels 40. In other examples, the stability sensors may be pressure sensors to determine the tyre pressure of the wheels, or to determine a suspension pressure in a suspension unit of the wheels. These may also generate outputs relating to the load distribution on the wheels. The stability parameter may also be used to determine grounding of one or more wheels, based on the load distribution.

In yet further examples, there may be only a single stability sensor on each wheel-axle in the form of a distance sensor which is mounted to a wheel-axle off-centre, or to a wheel on the wheel-axle. A distance sensor may be configured to measure the distance between the respective wheel-axle and the trailer to determine the tilt of the trailer with respect to the wheel-axle, and may therefore generate a stability parameter related to the load distribution on the wheels.

It will be appreciated that any suitable type of sensor may be used to generate a stability parameter relating to the load distribution on the wheels of a wheel-axle. It will also be appreciated that there may be multiple stability sensors which may be distributed across more than one wheel-axle in a manner similar to the first example roller crane 10 and that the multiple stability sensors may be different types of sensors.

The stability module 34 is configured to monitor the stability parameter and the location parameter and to identify whether the roller crane 100 is at risk of overturning based on the stability parameter and the location parameter in a similar manner to the first example roller crane 10.

The stability module 34 is configured to identify that the roller crane 100 is at risk of overturning when the stability parameter exceeds a threshold. The threshold is dynamically determined based on the location parameter. In some examples, the threshold may be fixed. In other examples, the stability module may identify that there is a risk of overturning when the stability parameter indicates that a wheel 40 on the rearmost wheel-axle 18 is not grounded.

Although it has been described that the stability sensor is disposed on the rearmost wheel-axle 18 and/or the frontmost wheel-axle 18, in other examples, the stability sensor may be disposed on any wheel-axle, or there may be multiple stability sensors which may be disposed on multiple wheel-axles. The number of stability sensors and the placement of the stability sensors on the roller crane may be customised for any particular roller crane. The stability sensors disposed on different wheel-axles may be different sensors configured to measure or monitor different things.

Although it has been described that the stability module monitors both the stability parameter and the location parameter, and identifies the risk of overturning based on the stability parameter and the location parameter, it will be appreciated that in other examples, there may be no location sensor to generate a location parameter, and the system may monitor only the stability parameter, and may identify the risk of overturning based solely on the stability parameter.

It will be appreciated that the system for preventing overturning of the roller crane 10, 100 may be retrofitted to any roller crane not having such a system. One or more stability sensors and optionally a location sensor may be mounted to the roller crane in suitable positions, and a stability module may be used to prevent or reduce the risk of overturning of the roller crane.

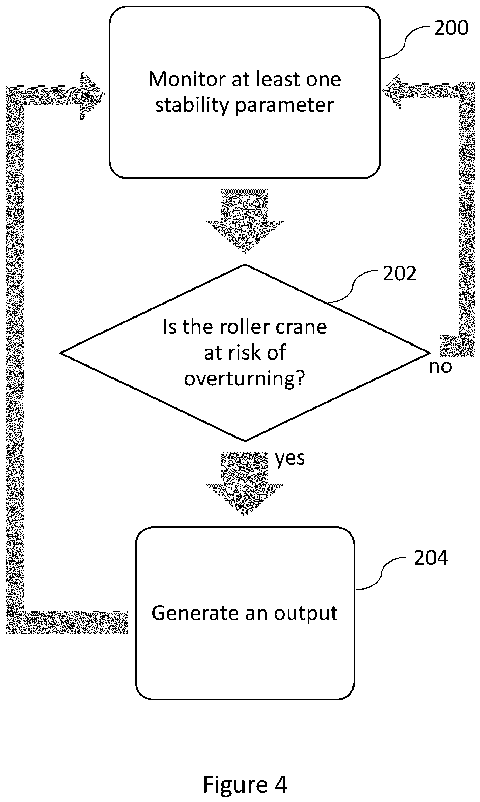

**Figure 4** is a flow chart showing steps of a general method to prevent overturning of a roller crane 10, 100 such as described with reference to Figures 1-3.

In block 200, the method comprises monitoring at least one stability parameter. The at least one stability parameter is generated by at least one stability sensor 30, 130 such as described with reference to Figures 1-3, and the stability parameter relates to the tilting of a wheel-axle 18 on which it is disposed or to a load distribution on the wheels 40 of the wheel-axle 18. The method then continues to block 202.

In block 202, the method comprises identifying whether the roller crane is at risk of overturning based on the stability parameter. For example, if the stability parameter indicates that a wheel-axle 18 is tilting with respect to the ground surface, or if the stability parameter indicates that a wheel 40 is not grounded, the method may identify that the roller crane 10, 100 is at risk of overturning.

If it is identified that the roller crane 10, 100 is not at risk of overturning, the method reverts back to block 200 to repeat the process in blocks 200 and 202 to ensure that the stability parameter is continually monitored. If it is identified that the roller crane 10, 100 is at risk of overturning, the method continues to block 204.

In block 204, the method comprises generating an output. The output may comprise automatically moving the crane 20, such as automatically reducing the extension of the crane 20, or reducing the slewing angle of the crane 20. Additionally, or alternatively, the output may include generating a visual or audible output to alert an operator to the fact that there is a risk of the roller crane 10, 100 overturning.

The method then returns to block 200 to repeat the process in blocks 200-204 to continually monitor the risk of overturning of the roller crane 10, 100.

In some examples, a location parameter generated by a location sensor 32 may also be monitored, and the identification of whether the roller crane is at risk of overturning may be further based on the location parameter.

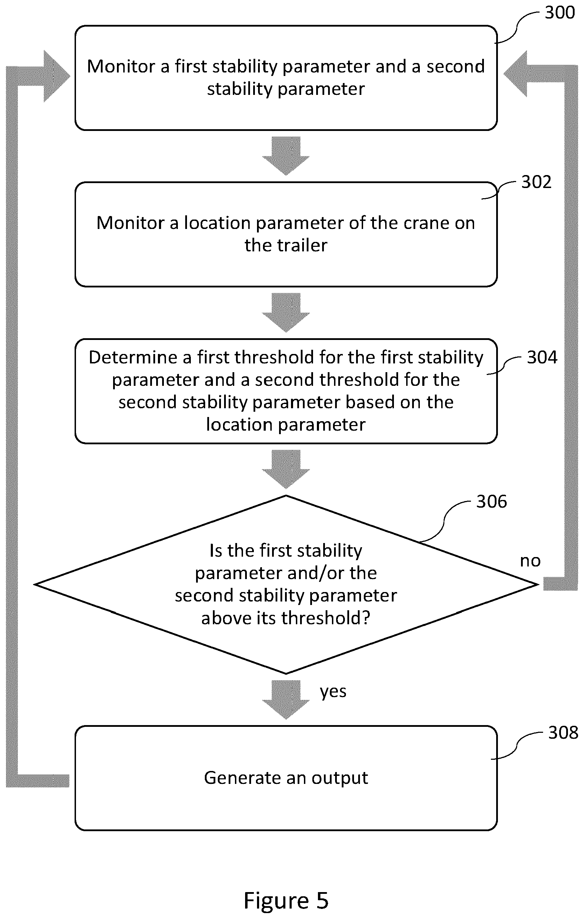

**Figure 5** is a flow chart showing more detailed steps to a method of preventing overturning of a roller crane 10, having at least two stability sensors 30 on different wheel-axles 18 and having a location sensor 32, such as described with reference to Figures 1-2.

This method begins at block 300 in which a first stability parameter and a second stability parameter are monitored. The first stability parameter and the second stability parameter are generated by respective stability sensors 30 disposed on different wheel-axles 18 relating to the tilting of the respective wheel-axle 18, or to a load distribution on the wheels 40 of the respective wheel-axle 18.

The method continues to block 302 in which a location parameter is monitored, relating to the location of the crane 20 on the trailer 14. It will be apparent that the location parameter may be monitored before, or at the same time as, the first stability parameter and the second stability parameter. The method then moves to block 304.

In block 304, a first threshold for the first stability parameter is determined and a second threshold for the second stability parameter is determined based on the location parameter. The method then moves to block 306.

In block 306, the method identifies whether the roller crane 10 is at risk of overturning by comparing the first stability parameter to the first threshold and comparing the second stability parameter to the second threshold. If neither the first stability parameter exceeds the first threshold, nor the second stability parameter exceeds the second threshold, then it is determined that there is no risk of overturning of the roller crane 10 and the method returns to block 300 to start the process again and repeat steps 300-306 to ensure that the stability parameters are continually monitored.

If the first stability parameter exceeds the first threshold and/or the second stability parameter exceeds the second threshold, the method continues to block 308. In some examples, the method may continue to block 308 only if both the first stability parameter exceeds the first threshold and the second stability parameter exceeds the second threshold.

In block 308, the method includes generating an output which may include the same outputs as block 204 in the method described with reference to Figure 4. The method then returns to block 300 to repeat the process from block 300-308 to ensure continued stability of the roller crane 10.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of preventing overturning of a roller crane, the roller crane comprising a truck, a trailer extending from the truck along a longitudinal axis and seated on at least two wheel-axles with wheels, and a crane mounted to the trailer to move along the longitudinal axis of the trailer, the method comprising:
monitoring a stability parameter with at least one stability sensor, the stability parameter relating to tilting of at least one of the wheel-axles or a load distribution on the wheels of at least one wheel-axle; and
identifying whether the roller crane is at risk of overturning based on the stability parameter; and
generating an output if it is determined that the roller crane is at risk of overturning.

2. A method according to claim 1, wherein the at least one stability sensor is configured to output a first stability parameter and a second stability parameter relating to tilting of at least two wheel-axles, or relating to the load distribution on the wheels connected to each of the at least two wheel-axles.

3. A method according to claim 1 or 2, wherein the stability parameter is generated by an inclination sensor mounted to a wheel-axle or a distance sensor arranged to measure the distance between the respective wheel-axle and the trailer.

4. A method according to any preceding claim, wherein the stability parameter is related to a change in tilting of at least one wheel-axle, and wherein the stability parameter is generated by an inertial sensor mounted to a wheel-axle.

5. A method according to any preceding claim, wherein the stability parameter is generated by a load cell on the respective wheel-axle or the respective wheels or by a pressure sensor on the respective wheels to determine tyre pressure or a suspension pressure in a suspension unit.

6. A method according to any preceding claim, wherein the method includes identifying that the roller crane is at risk of overturning if the stability parameter exceeds a threshold.

7. A method according to claim 2 and claim 6, wherein the method includes identifying that the roller crane is at risk of overturning if the first stability parameter exceeds a first threshold and/or if the second stability parameter exceeds a second threshold.

8. A method according to any of claims 1-7, wherein the stability parameter relates to grounding of at least one of the wheels, based on the load distribution.

9. A method according to claim 8, wherein the method includes identifying that the roller crane is at risk of overturning if the stability parameter indicates that a wheel is not grounded.

10. A method according to any preceding claim, wherein generating the output comprises reducing a slewing angle of the crane and/or reducing an extension of the crane.

11. A method according to any preceding claim, comprising monitoring a location parameter with at least one location sensor, the location parameter relating to the location of the crane on the trailer along the longitudinal axis, wherein identifying whether the roller crane is at risk of overturning is further based on the location parameter.

12. A system for preventing overturning of a roller crane, the roller crane comprising a truck, a trailer extending from the truck along a longitudinal axis and seated on at least two wheel-axles with wheels, and a crane mounted to the trailer to move along the longitudinal axis of the trailer, the system comprising:
at least one stability sensor configured to be mounted to the roller crane to generate a stability parameter relating to tilting of at least one of the wheel-axles or a load distribution on the wheels of at least one wheel axle;
a stability module configured to:
monitor the stability parameter and identify whether the roller crane is at risk of overturning based on the stability parameter; and
generate an output if it is determined that the roller crane is at risk of overturning.

13. A system according to claim 12, wherein the at least one stability sensor is configured to generate a first stability parameter and a second stability parameter relating to tilting of at least two wheel-axles, or relating to the load distribution on the wheels connected to each of the at least two wheel-axles.

14. A system according to claim 12 or 13, wherein the at least one stability sensor comprises an inclination sensor configured to be mounted to a wheel-axle or a distance sensor configured to measure the distance between the respective wheel-axle and the trailer.

15. A system according to any of claims 12-14, wherein the at least one stability sensor comprises an inertial sensor mounted to a wheel-axle and configured to generate the stability parameter relating to a change in tilting of the respective wheel-axle.

16. A system according to any of claims 12-15, wherein the at least one stability sensor comprises a load cell configured to be mounted on the respective wheel-axle or the respective wheels, or a pressure sensor configure to be mounted on the respective wheels to determine tyre pressure or a suspension pressure in a suspension unit.

17. A system according to any of claims 12-16, wherein the stability module is configured to identify that the roller crane is at risk of overturning when the stability parameter exceeds a threshold.

18. A system according to claim 13 and 17, wherein the stability module is configured to identify that the roller crane is at risk of overturning when the first stability parameter exceeds a first threshold and/or when the second stability parameter exceeds a second threshold.

19. A system according to any of claim 12-18, wherein the stability parameter relates to grounding of at least one of the wheels, based on the load distribution.

20. A system according to claim 19, wherein the stability module is configured to identify that the roller crane is at risk of overturning when the stability parameter indicates that a wheel is not grounded.

21. A system according to any preceding claim, comprising at least one location sensor configured to generate a location parameter relating to the location of the crane on the trailer along the longitudinal axis,
wherein the stability module is configured to monitor the location parameter and identify whether the roller crane is at risk of overturning based further on the location parameter.
